# EUROPÄISCHE PATENTSCHRIFT

(11) **EP 2 484 483 B1**
(45) Veröffentlichungstag und Bekanntmachung des Hinweises auf die Patenterteilung: **08.04.2015**
(21) Anmeldenummer: 12152891.3
(22) Anmeldetag: 27.01.2012
(51) Int. Cl.: B23Q 1/66, B23Q 7/14

(54) **Zuführ- und Ladeeinheit**
Supply and loading unit
Unité d'amenée et de chargement

(30) Priorität: 02.02.2011 DE 102011010152
(43) Veröffentlichungstag der Anmeldung: 08.08.2012
(73) Patentinhaber: Grob-Werke GmbH & Co. KG, 87719 Mindelheim (DE)
(72) Erfinder: Grob, Dr. h.c. Burkhart, 86825 Bad Wörishofen (DE)
(74) Vertreter: Schulz, Manfred

(56) Entgegenhaltungen:
- EP-A1- 0 128 090
- EP-A1- 0 289 453
- DE-U1- 8 219 802
- JP-A- 56 009 153
- US-A- 4 715 490

## Beschreibung

Die Erfindung betrifft eine Zuführ- und Ladeeinheit, die dafür vorgesehen ist, ein oder mehrere Werkstück/e für Bearbeitungszwecke auf dem Bearbeitungsplatz in dem Bearbeitungsraum einer Bearbeitungsmaschine zu- und/oder abzuführen, wobei die Zuführ-und Ladeeinheit mindestens zwei auf einer Führungsbahn bewegbare Werkstückträger umfasst und die Werkstückträger für die Aufnahme und den Transport des mindestens einen Werkstückes dient.

Gattungsgemäße Zuführ- und Ladeeinheiten haben die Aufgabe, in der Bearbeitungsmaschine fertig bearbeitete Werkstücke in kurzer Zeit aus dem Bearbeitungsraum zu entfernen und ein neues Werkstück der Bearbeitung in den Bearbeitungsraum einzuladen.

EP-0128090 offenbart eine Zuführ-und Ladeeinheit nach dem Oberbegriff des Anspruchs 1.

In diesem Zusammenhang ist der Begriff "Ladeeinheit" als Oberbegriff für das Beladen beziehungsweise Entladen, also das Zuführen und Abführen von Werkstücken zu und von der Bearbeitungsmaschine zu verstehen.

Üblicherweise sind im Stand der Technik die Werkstücke auf einem auf einer Führungsbahn bewegbaren Werkstückträger angeordnet. Dabei ist es möglich, dass ein Werkstückträger nur genau ein oder auch mehrere Werkstücke (auch unterschiedliche Werkstücke) tragen kann. Dabei ist es gleichbedeutend, ob das oder die Werkstück/e direkt auf dem Werkstückträger angeordnet ist/ sind oder das oder die Werkstück/e auf einer Werkstückpalette befestigt ist/sind und so das Werkstück mittelbar auf dem Werkstückträger ruht.

Üblicherweise befinden sich auf der Führungsbahn mindestens zwei bewegbare Werkstückträger, wobei in Förderrichtung der Werkstücke gesehen der erste Werkstückträger für den Abtransport des fertig bearbeiteten Werkstückes aus der Bearbeitungsmaschine dient, und der zweite, dahinter angeordnete Werkstückträger das nächste, zu bearbeitende Werkstück heranfördert. Je nach Auslegung der Führungsbahn beziehungsweise der Zuführ- und Ladeeinheit ist es natürlich auch möglich, dass sich auf der Führungsbahn mehr als zwei, zum Beispiel drei, vier oder noch mehr Werkstückträger befinden.

Die Führungsbahn dient für den Transport der Werkstückträger und ist zum Beispiel geradlinig und/oder auch gebogen verlaufend ausgeführt.

Im Stand der Technik ist die Anordnung so ausgeführt, dass der Werkstückträger in geeigneter Weise das Werkstück an die Bearbeitungsmaschine heranführt, dann während der Werkstückwechselphase das Werkstück in den Bearbeitungsraum hereinreicht, beziehungsweise das fertig bearbeitete Werkstück aufnimmt und aus dem Bearbeitungsraum herausführt. Dabei befindet sich der Werkstückträger nur während eines verhältnismäßig kurzen Zeitsegmentes im Bearbeitungsraum, nämlich nur dann, um das Werkstück aufzunehmen oder abzusetzen. Der Bearbeitungsraum ist der Größe des zu bearbeitenden Werkstücks optimal angepasst und optimiert. Das Belassen des Werkstückträgers während der Bearbeitung im Bearbeitungsraum würde diese kostbaren Raum verschwenden. Üblicherweise ist daher neben der Bearbeitungsmaschine die Führungsbahn angeordnet und die Werkstückträger sind jeweils derart angeordnet, dass diese das Werkstück von der Führungsbahn in den Bearbeitungsraum hineinreichen oder zurückversetzen. Für diese Bewegung ist ein separater Antrieb notwendig, der an jeden Werkstückträger angeordnet ist.

Dies führt zu einem verhältnismäßig großen Aufwand, da der Antrieb an dem ersten Werkstückträger nur für das Entladen, also das Herausnehmen des fertig bearbeiteten Werkstückes aus dem Bearbeitungsraum dient, beziehungsweise der Antrieb an dem zweiten Werkstückträger nur für das Beladen des Werkstückes nutzt.

Des Weiteren muss ein entsprechender Energieanschluss für den auf dem Werkstückträger mitfahrenden Antrieb vorgesehen sein, was mit entsprechenden Schleppketten und ähnlichem grundsätzlich realisierbar, aber entsprechend aufwändig ist. Neben entsprechenden Kosten ist dabei auch der Platzbedarf für diese Energiezuführung zu beachten. Außerdem benötigt der Antrieb selbst auf den Werkstückträgern Platz, der gegebenenfalls für den Transport des Werkstückes benötigt wird.

Aus dem Stand der Technik ist eine Palettierungsvorrichtung für Werkzeugmaschinen, bestehend aus Nebentischen bzw. Paletten bekannt, die von einer Palettenauflage auf den Maschinentisch geschoben werden können. Diese Palettenauflage soll sich dadurch auszeichnen, dass sie einen beweglichen Wagen aufweist mit zwei Kastenauflagen für zwei Paletten, die parallel zueinander in einem bestimmten Abstand voneinander angeordnet sind.

Die vorliegende Erfindung hat es sich zur Aufgabe gemacht, den zuvor beschriebenen Stand der Technik zu verbessern und zumindest einen der vorgenannten Nachteile zu überwinden.

Zur Lösung dieser Aufgabe geht die Erfindung aus von der Zuführ- und Ladeeinheit wie eingangs beschrieben und schlägt vor, dass die Führungsbahn einen winklig oder quer zur Förderrichtung der Werkstücke auf der Führungsbahn, durch einen Antrieb bewegbaren, mindestens einen Werkstückträger aufnehmenden Führungsbahnabschnitt aufweist und der Führungsbahnabschnitt den Werkstückträger für Be- und Entladezwecke in Richtung des Bearbeitungsraumes oder zurück versetzt.

Üblicher Weise wird das Werkstück quer, also rechtwinklig zur Führungsbahn von dieser versetzt, um das Werkstück von der Führungsbahn in den Bearbeitungsraum, auf den Bearbeitungsplatz in der Bearbeitungsmaschine zu bringen beziehungsweise von dort zu holen. Die Erfindung beschränkt sich jedoch nicht nur auf die rechtwinklige Ausgestaltung, sondern umfasst auch eine spitzwinklige Bewegung des Führungsbahnabschnittes, der zumindest einen Werkstückträger aufnimmt, relativ zur Längserstreckung der Führungsbahn, beziehungsweise der Förderrichtung der Werkstücke. Während des Wechselprozesses wird dieser Führungsbahnabschnitt aus der Führungsbahn herausbewegt, was problemlos möglich ist, da in diesem Zeitabschnitt kein Werkstückträger auf der Führungsbahn über den Bereich des Führungsbahnabschnittes zu bewegen ist. Dabei ist der Führungsbahnabschnitt mit einer ansonsten mit der üblichen Führungsbahn identischen Führung oder Schiene beziehungsweise ähnlichen Führungselementen ausgestattet, um einen problemlosen Transport, wie üblich, des Werkstückträgers auf der Führungsbahn zu gestatten.

Der wesentliche Vorteil der Erfindung liegt darin, dass der mit dem Werkstückträger mitfahrende Antrieb, der für das Versetzen des Werkstückes in oder aus dem Bearbeitungsraum notwendig war, eingespart wird und jetzt ein Antrieb für den Führungsbahnabschnitt vorgesehen ist, der in gleicher Weise sowohl für den Beladevorgang, als auch für den Entladevorgang einsetzbar ist. Es wird nur der jeweilige Werkstückträger entsprechend dem Bearbeitungsprozess gewechselt.

Der erfindungsgemäße Vorschlag kommt daher mit einer deutlich geringeren Anzahl an Antrieben aus. Des Weiteren wird auch kein mit dem Werkstückträger mitfahrende Energieversorgung für die Antriebe benötigt wie im Stand der Technik. Auch ist der Antrieb für den Führungsbahnabschnitt grundsätzlich unterhalb der Führungsbahn anordenbar und stört somit nicht die Zugänglichkeit zum Bearbeitungsraum.

In der aus dem Stand der Technik bekannten Palettierungsvorrichtung ist eine Lösung gezeigt, bei welcher sogenannte Kastenauflagen eine Traverse tragen. Die Lösung ist dabei so konzipiert, dass weder die Kastenauflage, noch die Traverse in Richtung auf den Maschinentisch bewegbar ist, sondern sie sind lediglich quer verschiebbar. Zwischen dem Maschinentisch und der Kastenauflage bzw. der jeweiligen Traverse, welche dort positioniert wird, ist eine Laufschienenfortführung vorgesehen, über die dann die Palette und nicht der Führungsbahnabschnitt wie bei der Erfindung, in den Bearbeitungsraum transportiert wird. Demzufolge ist hier schon ein wesentlicher Vorteil der erfindungsgemäßen Lösung gegenüber dem Stand der Technik zu sehen, wonach der Führungsbahnabschnitt den Werkstückträger für Be- oder Entladezwecke in Richtung des Bearbeitungsraumes oder zurück versetzt. Dies kann die Palettierungsvorrichtung im Stand der Technik nicht leisten. Der Nachteil der bekannten Palettierungsvorrichtung besteht weiter darin, dass eine Laufschienenfortführung entweder am Maschinentisch oder an einer Kastenauflage, die zwischen zwei Positionen bzw. in Querrichtung verschiebbar ist, angeordnet werden muss. Dadurch entsteht ein weiterer Nachteil, nämlich die Vergrößerung des Bearbeitungsraumes. Heutige Bearbeitungsmaschinen sind bestrebt, die Bearbeitungsräume relativ klein zu gestalten, um beispielsweise den notwendigen Aufwand zur Freihaltung der Zuführelemente gering zu gestalten. Durch spanabhebende Verfahren entstehen in der Regel Späne, die sich auf Paletten und/oder den Schienen der Zuführeinheiten absetzen können. Hier muss für eine ständige Reinigung gesorgt werden. Wird der Bearbeitungsraum kleiner gestaltet, ist der Aufwand hierfür nicht so groß.

Ein weiterer Gesichtspunkt ist dabei, dass die Störanfälligkeit der Beschickungsvorrichtung wesentlich höher ist als bei der Lösung nach der Erfindung. Außerdem ist ein weiteres Merkmal der bekannten Palettierungsvorrichtung nicht zu entnehmen, wonach die Andrückvorrichtung an dem bewegbaren Führungsabschnitt und mit diesem mitfahrend ausgebildet ist. Auch ist klar, dass die bekannten Lösungen des Standes der Technik, wie eingangs beschrieben, einen entsprechenden mitfahrenden Energieanschluss besitzen müssen. So ist beispielsweise in der bekannten Palettierungsvorrichtung im Stand der Technik der Energieanschluss für den auf dem Werkstückträger mitfahrenden Antrieb vorgesehen, was grundsätzlich mit entsprechenden Schleppketten oder ähnlichem realisiert wird. Dies ist beispielsweise auch bei der bekannten Palettierungsvorrichtung so gelöst. Demzufolge besteht hier ein weiterer Nachteil des Standes der Technik, der mit der Erfindung beseitigt wird. Des Weiteren wird der Nachteil des relativ großen Bearbeitungsraumes ebenfalls durch die Erfindung wesentlich besser gelöst, indem dieser sehr klein gehalten werden kann.

Für die hochgenaue Bearbeitung des Werkstückes in der Bearbeitungsmaschine sind sogenannte Indexsitze oder Indexstifte am Bearbeitungsplatz in der Bearbeitungsmaschine vorgesehen, auf welche das Werkstück entweder direkt oder mittelbar, zum Beispiel durch eine entsprechende Werkzeugpalette positionsgenau aufgesetzt wird und so eine hochgenaue Bearbeitung ermöglicht, da damit die relative Lage des Werkstückes in den Bearbeitungsaggregaten (Werkzeugspindeln, Bearbeitungswerkzeug und so weiter) genau festgelegt ist. Es ist daher für eine hochgenaue Bearbeitung wichtig, sicherzustellen, dass das Werkstück tatsächlich positionsgenau auf dem Bearbeitungsplatz aufliegt. Der Einsatz der vorgeschlagenen Andrückvorrichtung gestattet es, das Werkstück am Bearbeitungsplatz sicher auf die Indexstifte und sonstigen Lagerpunkten zu positionieren. Unter Einsatz der Andrückvorrichtung wird die Gefahr einer falschen Positionierung des Werkstückes in der Bearbeitungsmaschine erheblich reduziert und damit in gleichem Maße auch das Risiko einer Ausschussproduktion.

Bei der Ausgestaltung der alternativ vorgesehenen Andrückvorrichtung bestehen mehrere Varianten, wobei die nachfolgende Aufzählung hierfür nicht abschließend ist.

Zunächst ist vorgesehen, dass die Andrückvorrichtung an dem bewegbaren Führungsbahnabschnitt und mit diesem mitfahrend ausgebildet ist. Diese Variante hat den Vorteil, dass die Andrückvorrichtung für mehrere unterschiedliche Werkstückträger vorgesehen ist und somit zum Beispiel insbesondere einer Bearbeitungsmaschine eine Andrückvorrichtung außerhalb der Bearbeitungsmaschine, an dem Führungsbahnabschnitt zugeordnet ist. Eine entsprechend effiziente Nutzung der so realisierten Andrückvorrichtung ist die Folge.

In einem weiteren Vorschlag ist die Andrückvorrichtung an dem Werkstückträger und mit diesem mitfahrend ausgebildet. Eine solche Ausgestaltung erlaubt es, dass die Andrückvorrichtung auch während des Transports des Werkstückträgers auf der Führungsbahn, also vor und nach der jeweiligen Bearbeitung durch den Einsatz der Andrückvorrichtung gesichert ist.

In einer alternativen Ausgestaltung ist vorgesehen, dass der Werkstückträger gabelartig ausgebildet ist. Das Werkstück ruht auf den zwei oder mehreren Zinken der gabelartigen Ausgestaltung und erlaubt es, dass das Werkstück durch eine vertikale Bewegung auf die Aufnahme beziehungsweise den Bearbeitungsplatz aufgesetzt oder abgehoben wird.

Um das Werkstück auf dem Bearbeitungsplatz aufzusetzen oder abzuheben bestehen ebenfalls mehrere mögliche Varianten, wobei die nachfolgende Aufzählung hierzu nicht abschließend ist.

Zunächst wird vorgeschlagen, dass der Werkstückträger auf dem Führungsbahnabschnitt für Entlade- oder Beladezwecke anhebbar beziehungsweise absenkbar ist. In dieser Variante führt der Werkstückträger relativ zu dem in der Regel horizontal beweglichen Führungsbahnabschnitt eine vertikale Bewegung aus, wobei hier ein verhältnismäßig geringer Hub von einigen Millimetern bis wenigen Zentimetern bereits ausreicht, um den gewünschten Effekt zu erreichen, nämlich das Werkstück auf die vorstehenden Indexpunkte aufzusetzen oder von diesen abzuheben. Hierfür besitzt der Werkstückträger zum Beispiel einen entsprechenden Vertikalantrieb, der zum Beispiel durch einen Elektromotor oder hydraulisch oder pneumatisch ausgebildet ist und durch entsprechende Vertikalführungen unterstützt und geführt ist. Von Vorteil bei dieser Variante ist, dass der Antrieb eben nur für das Gewicht des Werkstückes und der Elemente des Werkstückträgers, auf welchem das Werkstück aufliegt, auszulegen ist, also verhältnismäßig kleine Antriebe ausreichen.

Alternativ hierzu wird vorgeschlagen, dass der Führungsbahnabschnitt an einer anhebbaren beziehungsweise absenkbaren Konsole angeordnet ist und die Konsole für Entlade- beziehungsweise Beladezwecke anhebbar oder absenkbar ist. Zwar ist diese Variante konstruktiv aufwendiger, da neben dem Gewicht des Werkstückes der Werkstückträgers auch das Gewicht des verfahrbaren Führungsbahnabschnittes anzuheben beziehungsweise abzusenken ist, allerdings erspart diese Variante einen jeweiligen Vertikalantrieb in jedem einzelnen Werkstückträger und ist auch platzsparender, da dieser Vertikalantrieb vom Bearbeitungsraum entfernt realisierbar ist.

Eine andere Variante für das Aufsetzen oder Abheben des Werkstückes von dem Werkstückträger besteht darin, dass der Bearbeitungsplatz an einer anhebbaren beziehungsweise absenkbaren Werkstückauflage angeordnet ist und diese Werkstückauflage für Entlade- oder Beladezwecke absenkbar oder anhebbar ist. Diese Variante hat den Vorteil, dass diese in der Bearbeitungsmaschine, insbesondere in der Werkstückauflage beziehungsweise dem Werkstücktisch realisierte Vertikalachse nicht nur für die Werkstückbearbeitung einsetzbar ist, sondern auch mithilft, den Werkstückwechsel durchzuführen. Dadurch kann die separate Anordnung eines Antriebes in Vertikalrichtung am Werkstückträger oder am Führungsbahnabschnitt eingespart werden.

Die vorgeschlagene Zuführ- und Ladeeinheit hat nicht nur die Aufgabe, Werkstücke von und in die Bearbeitungsmaschine zu laden, sondern dient natürlich auch dazu, das Werkstück an- und abzufördern (beziehungsweise zu führen). Für den Transport der Werkstückträger auf der Führungsbahn ist ein Antrieb vorgesehen. Die Ausgestaltung des Antriebes ist dabei sehr variabel realisierbar. Zum Beispiel ist es möglich, dass die Antriebsbahn als Rollenbahn realisiert ist und zumindest ein Teil der Rollen derart (zum Beispiel mit Elektromotoren) antreibbar ist, um den Werkstückträger zu transportieren. Des Weiteren ist alternativ vorgesehen, einen Antrieb, zum Beispiel einen Elektromotor, an dem Werkstückträger selbst vorzusehen, der über antreibbare Mittel, zum Beispiel Antriebsräder oder ähnlichem, auf der Führungsbahn bewegbar ist. Natürlich ist alternativ auch ein Linearmotorkonzept oder ähnliches in der Zuführ- und Ladeeinheit realisierbar.

Eine geschickte Ausgestaltung des Antriebes besteht darin, dass für den Antrieb des Werkstückträgers auf der Führungsbahn ein parallel zur Führungsbahn beweglicher und antreibbarer Transportbalken vorgesehen ist, der mindestens zwei Verbindungsstellen zum zumindest kraftschlüssigen Verbund mit je einem Werkstückträger mit dem Transportbalken aufweist. Dieses Antriebskonzept ermöglicht es, durch einen zu bewegenden Transportbalken zwei oder mehrere Werkstückträger gleichzeitig zu transportieren. Dies nutzt den Umstand aus, dass das Zufördern eines neuen Werkstückes gleichzeitig mit dem Abfördern des bearbeiteten Werkstückes erfolgen kann. Um die Querbewegung des Werkstückträgers auf dem Führungsbahnabschnitt zu erlauben, ist an den Transportbalken eine Verbindung vorgesehen, die leicht lösbar ist, wozu zum Beispiel ein zumindest kraftschlüssiger Verbund vorgesehen ist. Dies kann zum Beispiel durch Magnetkräfte oder eine einfache mechanische Verriegelung, Bremse oder ähnliches erfolgen. Anstelle eines nur kraftschlüssigen Verbundes ist aber auch ein formschlüssiger Verbund möglich, der zum Beispiel wirkt, wenn das Werkstück durch den Transportbalken auf der Führungsbahn bewegt wird, was zum Beispiel durch eine entsprechende Hinterschneidung oder ähnliches realisierbar ist.

Eine vorteilhafte Ausgestaltung der vorgeschlagenen Zuführ- und Ladeeinheit sieht vor, dass auf der Führungsbahn genau zwei Werkstückträger vorgesehen sind und ein erster Werkstückträger zwischen einem Werkstückaufnahmeplatz und dem Führungsbahnabschnitt und ein zweiter Werkstückträger zwischen dem Führungsbahnabschnitt und dem Werkstückabnahmeplatz hin und her verkehrt. Durch eine solche Ausgestaltung wird eine sehr kompakte Bauweise der Zuführ- und Ladeeinheit erreicht, wobei dem vorgeschlagenen Transportbalken ein gleichzeitiger Antrieb des ersten und zweiten Werkstückträgers möglich ist. Dabei wird das Werkstück von dem ersten Werkstückträger in die Bearbeitungsmaschine eintransportiert beziehungsweise die Bearbeitungsmaschine hiermit beladen, nach der Bearbeitung wird der Bearbeitungsraum der Bearbeitungsmaschine durch den zweiten Werkstückträger entladen und das Werkstück abgeführt. Das Werkstück wird dabei an einem Werkstückaufnahmeplatz auf den ersten Werkstückträger aufgesetzt und an dem Werkstückabnahmeplatz, wenn dieses entsprechend bearbeitet wurde, von dem zweiten Werkstückträger abgehoben. Es erfolgt eine Übergabe des Werkstückes von dem ersten Werkstückträger über den Bearbeitungsplatz in der Bearbeitungsmaschine zum zweiten Werkstückträger.

Grundsätzlich ist vorgesehen, dass die vorgeschlagene Zuführ-und Ladeeinheit mindestens zwei Werkstückträger umfasst, wobei bei der vorgeschlagenen Ausgestaltung mit genau zwei Werkstückträgern ein optimales, raumsparendes Konzept vorgeschlagen wird. Es wird dabei vorgesehen, dass das Werkstück zum Beispiel händisch oder durch ein Portal oder einen Roboter an den Werkstückaufnahmeplatz angefördert und in geeigneter Weise, also zum Beispiel auch händisch, durch ein Portal oder einen Roboter oder ähnlichem am Werkstückabnahmeplatz abtransport wird. Somit ist eine so ausgestaltete Zuführ- und Ladeeinheit Teil eines komplexeren, mehrere Bearbeitungsmaschinen miteinander verbindenden Transportsystems.

In einem anderen, alternativen Konzept ist vorgesehen, dass die vorgeschlagene Zuführ- und Ladeeinheit zur Verkettung von mindestens zwei in Werkstückförderrichtung hintereinander angeordneten Bearbeitungsmaschinen dient. Üblicherweise werden sich dann auf der vorgeschlagenen Zuführ- und Ladeeinheit eine Mehrzahl von Werkstückträgern befinden, die gegebenenfalls auch, zum Beispiel in einem geschlossenen Transportkreis, alle oder mehrere der hintereinander angeordneten Bearbeitungsmaschinen anfahren.

Der vorgeschlagene Führungsbahnabschnitt gestattet es, dass die Zuführ- und Ladeeinheit das Zufördern des Werkstückes von der Führungsbahn in den Bearbeitungsraum mit genau einem Antrieb, nämlich dem Antrieb des Führungsbahnabschnittes, auskommt. Dabei ist die Anordnung so gewählt, dass der Führungsbahnabschnitt zur wechselseitigen Aufnahme und Bewegung des ersten beziehungsweise zweiten Werkstückträgers in Richtung des Bearbeitungsraumes und zurück dient. Hieraus resultiert eine hohe Auslastung und daher auch hohe Effizienz des Vorschlages.

Die erfindungsgemäßen Vorzüge werden nicht nur durch die vorgeschlagene Zuführ- und Ladeeinheit genutzt, auch eine von der Erfindung umfasste Bearbeitungsmaschine, die mit einer vorgeschlagenen Zuführ- oder Ladeeinheit ausgestattet ist, nutzt in erheblicher Weise die Vorzüge der Erfindung, wobei insbesondere die vertikale Verfahrbarkeit des Auflageplatzes der Bearbeitungsmaschine das Be- und Entladen des Werkstückes erheblich unterstützt.

In der Zeichnung ist die Erfindung insbesondere in einem Ausführungsbeispiel schematisch dargestellt. Es zeigen:

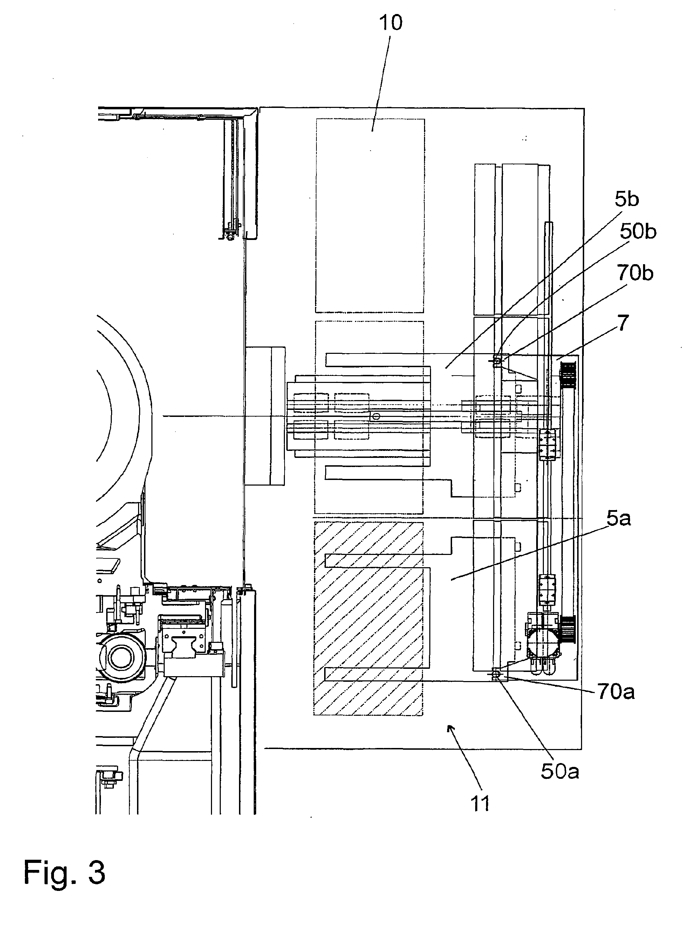

- Fig. 1a, 2a und 3: die erfindungsgemäße Zuführ- und Ladeeinheit in Draufsicht in jeweils unterschiedlichen Positionen und
- Fig. 1b und 2b: in einer Seitenansicht die erfindungsgemäße Zuführ- und Ladeeinheit in zwei verschiedenen Positionen

In den Figuren sind gleiche oder einander entsprechende Elemente jeweils mit den gleichen Bezugszeichen bezeichnet und werden daher, sofern nicht zweckmäßig, nicht erneut beschrieben.

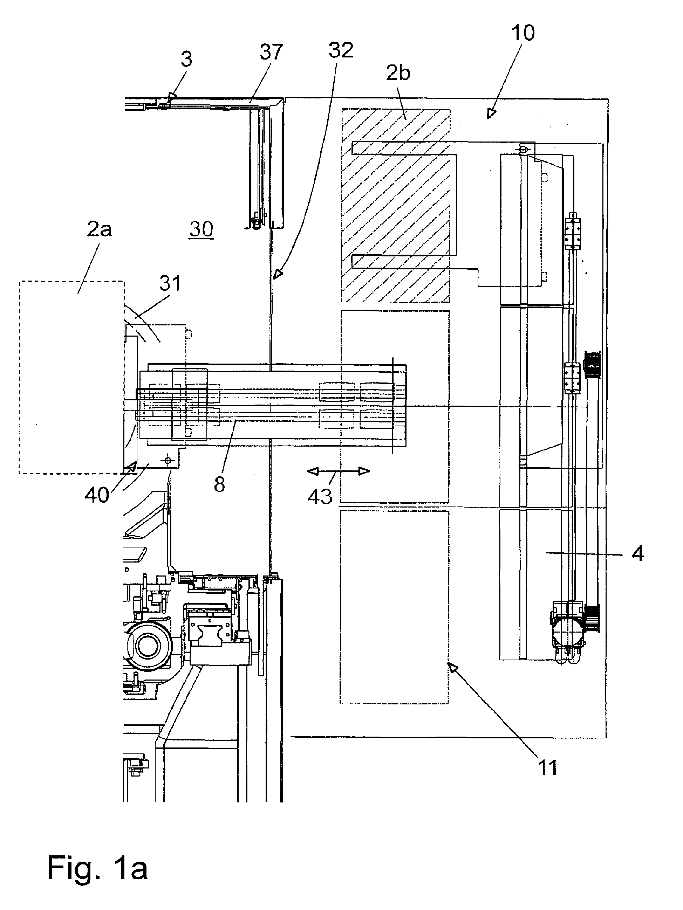

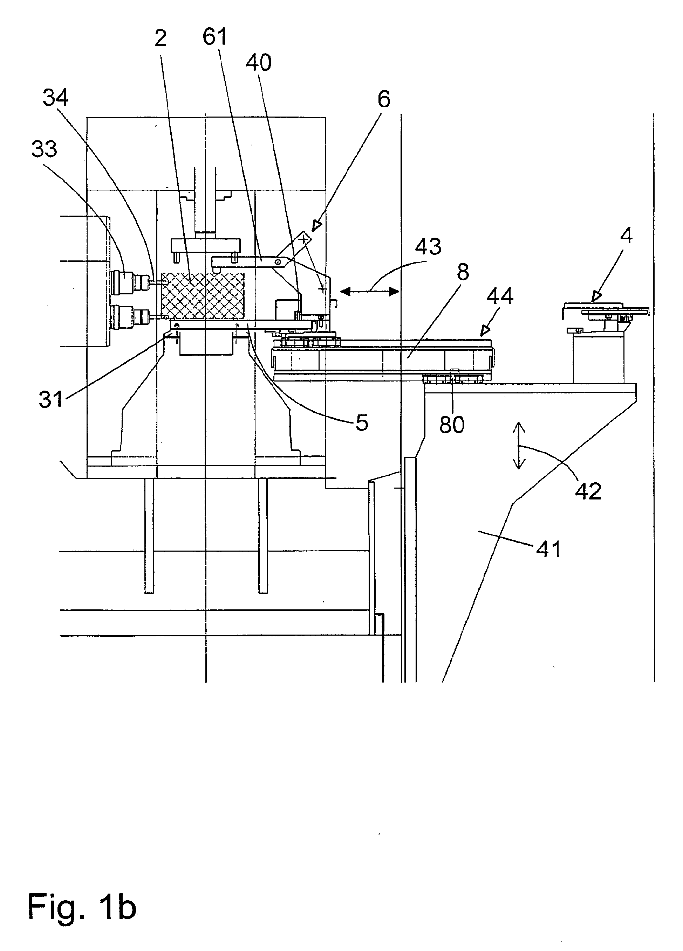

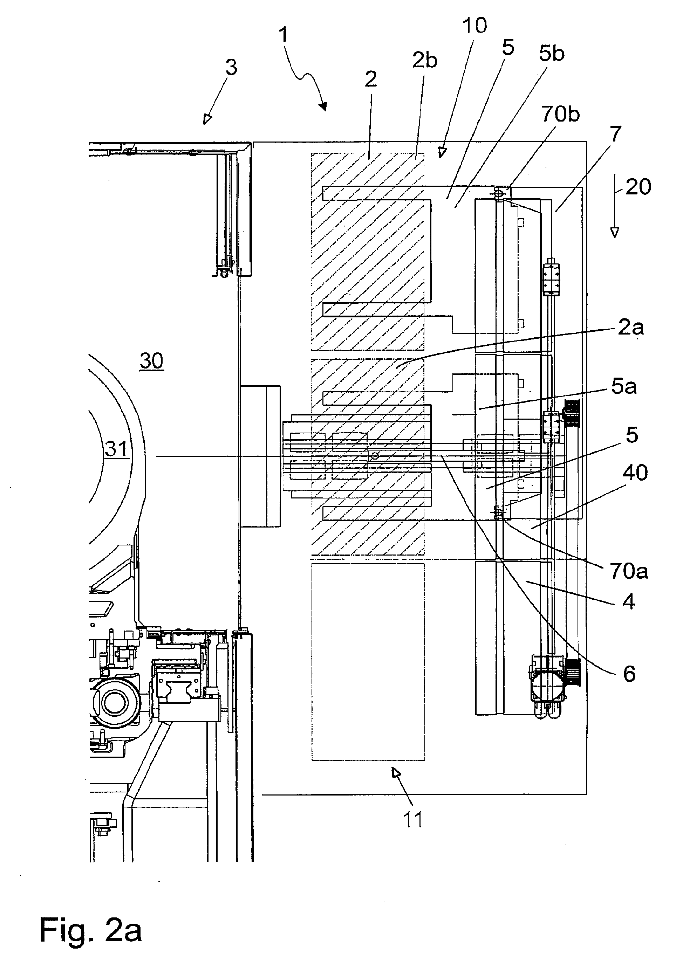

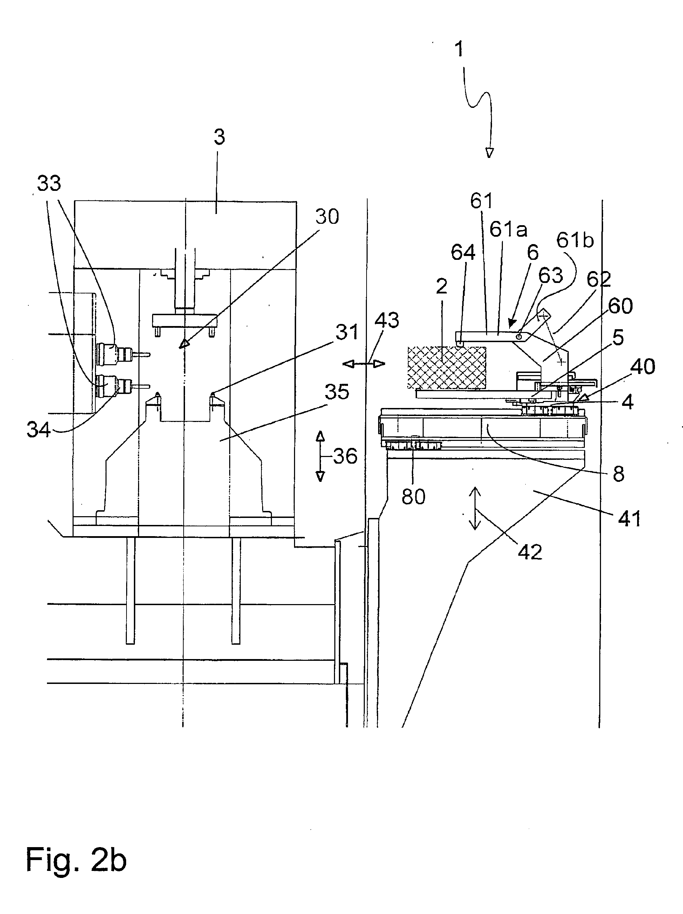

Die beigelegten Figuren zeigen in Drauf- und Seitenansicht verschiedene Stellungen der erfindungsgemäßen Zuführ- und Ladeeinheit 1. Dabei korrespondieren Figur 1a und 1b sowie Figur 2a und 2b.

Eine Ausgestaltung der erfindungsgemäßen Zuführ- und Ladeeinheit 1 ist zum Beispiel in Fig. 2a näher gezeigt und beschrieben. Die Zuführ- und Ladeeinheit 1 dient dabei dazu, eine Vielzahl von Werkstücken 2, 2a, 2b dem Bearbeitungsraum 30 einer Bearbeitungsmaschine 3, in Fig. 2a links angedeutet, zuzuführen beziehungsweise nach deren Bearbeitung aus diesem zu entfernen.

Hinzu besitzt die Zuführ- und Ladeeinheit 1 eine Führungsbahn 4, auf welche zwei Werkstückträger 5, 5a und 5b längs der Führungsbahn 4 beweglich antreibbar sind.

Die Werkstückträger 5a, 5b dienen dazu, je ein Werkstück 2, 2a, 2b zu tragen.

Der Begriff Werkstück 2 ist dabei sehr variabel definiert, das Werkstück 2 kann direkt auf dem Werkstückträger 5 aufgelegt sein oder durch eine Werkstückpalette (nicht gezeigt) auf dem Werkstückträger 5 ruhen. Es ist klar, dass die hier gezeigte Variante natürlich in gleicher Weise einsetzbar ist, wenn ein Werkstückträger 5 mehrere Werkstücke 2 (nicht gezeigt) trägt.

Die Werkstücke 2, 2a, 2b werden auf der Führungsbahn 4 entlang der Förderrichtung 20, hier von oben nach unten transportiert. Das in Förderrichtung 20 zweite Werkstück 2a befindet sich im mittleren Bereich der Führungsbahn 4, das in Förderrichtung 20 erste Werkstück 2b wurde gerade in dem Werkstückaufnahmeplatz 10 auf den gabelartig ausgebildete Werkstückträger 5b aufgesetzt.

Der Transport der Werkstücke 2a, 2b erfolgt mit auf der Führungsbahn 4 angeordneten und beweglichen Werkstückträgern 5, 5a, 5b, wobei der in Förderrichtung erste Werkstückträger mit dem Bezugszeichen 5a gekennzeichnet ist, der zweite, Werkstückträger mit dem Bezugszeichen 5b.

Die erste Aufgabe der Zuführ- und Ladeeinheit 1 besteht darin, das auf den Werkstückaufnahmeplatz 10 auf den zweiten Werkstückträger 5b aufgesetzte Werkstück 2b möglichst zügig der Bearbeitung in der Bearbeitungsmaschine 3 zuzuführen. Um dies zu erreichen, muss zunächst das gerade in der Bearbeitungsmaschine 3 fertig bearbeitete Werkstück 2a aus diesem abtransportiert werden, hierfür dient der erste Werkstückträger 5a.

Fig. 2a zeigt die Situation, bei welcher das erste Werkstück 2a mit seiner Bearbeitung gerade abgeschlossen worden ist und aus dem Bearbeitungsraum 30 mit Hilfe des Führungsbahnabschnitts 40 heraustransportiert worden ist.

Fig. 1a zeigt hingegen die Situation, bei welcher der Führungsbahnabschnitt 40, der zwischen dem Werkstückaufnahmeplatz 10 und dem Werkstückabnahmeplatz 11 angeordnet ist, komplett nach links in dem Bearbeitungsraum 30 der Bearbeitungsmaschine versetzt ist. In Fig. 1a gezeigte Situation ist der Zeitpunkt, wo das Werkstück 2a in der Bearbeitungsmaschine 3 fertig bearbeitet ist. Die den Bearbeitungsraum 30 begrenzende Maschinenverkleidung 37 ist hierzu derart geöffnet, dass sich eine Öffnung 32 zwischen der Führungsbahn 4 und dem Bearbeitungsraum 30 ergibt, durch welche der Führungsbahnabschnitt 40 in die Bear beitungsmaschine 3 eingreifen kann.

In Fig. 2b ist in der Seitenansicht gut zu sehen, wie das Werkstück 2 auf dem Werkstückträger 5 ruht. Die Führungsbahn 4 besitzt hier einen aus der Führungsbahn 4 herausbewegbaren Führungsbahnabschnitt 40, durch welchen der Werkstückträger 5 samt seinem Werkstück 2 in den Bearbeitungsraum 30 transportiert werden kann. Dies wird mit dem Doppelpfeil 43 angedeutet.

Die Bearbeitungsmaschine 3 besitzt eine Mehrzahl von Arbeitsspindeln 33, die je ein Bearbeitungswerkzeug 34 rotativ antreiben.

Der Führungsbahnabschnitt 40 ist daher etwas komplexer aufgebaut. Er besitzt eine Querführung 8, auf welcher der Führungsbahnabschnitt 40 rechtwinklig zur normalen Förderrichtung 20 des Werkstückes (entlang des Doppelpfeils 43) beweglich ist. Die Querführung 8 ist dabei nicht als feststehendes Bauelement ausgebildet, sondern ist seinerseits ebenfalls beweglich, wie dies im Vergleich zwischen Fig. 2b und 1b gut zu erkennen ist. Die Querführung 8 ist auf der Konsole 41 gelagert, hierzu sind entsprechende Gleitlager 80 vorgesehen. Im Bereich der Gleitlager 80 ist auch ein Antrieb 44, einerseits für die Querführung 8 relativ zum Gleitlager 80, aber auch ein Antrieb für den Führungsbahnabschnitt 40 auf der Querführung 8 vorgesehen. Dies kann in einfacher Weise mit einem doppelt nutzenden Antrieb realisiert sein. Die Bewegung ist in einfacher Weise von dem Antrieb auf die beiden bewegten Elemente Querführung 8 relativ zur Konsole 41 und Führungsbahnabschnitt 40 relativ zur (bewegten) Querführung 8 mit Hilfe eines nicht dargestellten Getriebes ableitbar.

Die Konsole 41 ist vertikal bewegbar, dies ist durch den Doppelpfeil 42 angedeutet. Durch diese vertikale Bewegbarkeit relativ zum beispielsweise stillstehenden Bearbeitungsplatz 31 ist es in einfacher Weise möglich, das Werkstück 2 von dem Werkstückträger 5 auf dem Bearbeitungsplatz 31 abzusetzen oder von diesem aufzunehmen.

Gleiches kann dadurch erreicht werden, dass die Werkstückauflage 35 (vgl. Fig. 2b) vertikal bewegbar ist, wie dies mit dem Doppelpfeil 36 angedeutet ist. Auch hierdurch ist es möglich, bei einer Aufwärtsbewegung der Werkstückauflage 35 das Werkstück 2 von dem Werkstückträger 5 abzuheben, durch eine Absenkbewegung der Werkstückauflage 35 wird das Werkstück 2 von dem Bearbeitungsplatz 31 abgehoben und auf den Werkstückträger 5 gesetzt.

In einer vorteilhaften Weiterentwicklung der Zuführ- und Ladeeinheit 1 ist vorgesehen, dass eine Andrückvorrichtung 6 eingesetzt wird. In der in Fig. 2b dargestellten Ausgestaltung ist die Andrückvorrichtung 6 mit dem Führungsbahnabschnitt 40 mitfahrend realisiert. Gebildet wird die Andrückvorrichtung 6 von einem Galgen 60, der ein Drehgelenk 63 an seinem oberen, oberhalb der oberen Kante des Werkstückes 2 liegenden Bereich trägt. In dem Drehgelenk 63 ist ein hebelartiger Stempel 61 drehbar gelagert. Der Stempel 61 besteht in dem hier gezeigten Ausführungsbeispiel aus zwei Stempelabschnitten 61a und 61. Der erste längere Stempelabschnitt überragt das Werkstück 2. Der zweite Stempelabschnitt 61b erstreckt sich auf der anderen Seite des Drehgelenks 63. An seinem dem Drehgelenk 63 abgewandten Ende greift ein Antrieb 62, zum Beispiel ein hydraulisch oder pneumatisch betriebener Arbeitszylinder, ein Elektromotor oder ähnliches an. Durch die Hebelwirkung wird somit per Aktivierung des Antriebes 62 der hebelartige Stempel 61 entgegen des Uhrzeigersinns geschwenkt und der Stempelpunkt 64 auf das Werkstück 2 gepresst. Dadurch wird zunächst das Werkstück 2 auf dem Werkstückträger 5 fixiert, so wird ein Herunterfallen oder Verrutschen des Werkstückes 2 relativ zum Werkstückträger 5 vermieden. So ist es auch grundsätzlich möglich, verhältnismäßig große Beschleunigungen, also schnelle Bewegungen des Werkstückträgers 5 zu realisieren, was insbesondere für einen zügigen Werkstückwechsel in der Bearbeitungsmaschine von Vorteil ist. Insbesondere ist vorgesehen, dass die Andrück vorrichtung 6 mit dem Führungsbahnabschnitt 40 mitfährt (siehe Fig. 1b) und so die Andrückvorrichtung 6 nicht nur eine verhältnismäßig schnelle Bewegung des Führungbahnabschnittes beziehungsweise Werkstückes im Werkstückwechselfall zulässt, sondern auch für ein sicheres, positionsgenaues Aufsetzen des Werkstückes 2 auf den Bearbeitungsplatz 31 dient. Insbesondere in Fig. 1b ist gut zu erkennen, dass die Auflagepunkte am Bearbeitungsplatz 31 zum einen konisch und zum anderen stiftartig ausgebildet sind und so ein sicheres, positionsgenaues Fixieren und Spannen des Werkstückes in der Bearbeitungsmaschine sicherstellen sollen. In der in Fig. 1b gezeigten Situation befindet sich das Werkstück 2 im Bearbeitungsraum 30 und der Stempel 61 drückt auf das Werkstück 2. Wird nun die Konsole 41 etwas abgesenkt (Doppelpfeil 42), so kommt der gabelartig ausgebildete Werkstückträger 5 unterhalb des Werkstücks 2 frei, weil das Werkstück 2 dann auf den Indexpunkten beziehungsweise Auflagepunkten des Bearbeitungsplatzes 31 aufliegt. Dabei ist der Stempel 61 ausreichend federnd ausgebildet, um bei Absenkbewegungen der Konsole 41 nicht zu einem Klemmen zu führen. Gleichzeitig wird aber eine entsprechende Kraftkomponente auf das Werkstück 2 nach unten in dieses eingeprägt, um einen sicheren positionsgenauen Sitz des Werkstückes 2 auf dem Bearbeitungsplatz 31 zu erreichen.

Für einen Transport der Werkstückträger 5a, 5b auf der Führungsbahn 4 (unter Einfluss des Führungsbahnabschnitts 40) ist ein Transportbalken 7 vorgesehen. In dem hier gezeigten Ausführungsbeispiel ist die Führungsbahn 4 gerade verlaufend ausgebildet, sie kann gegebenenfalls aber auch gebogen sein. Der Transportbalken 7 weist an seinen jeweiligen Enden Verbindungsstellen 70a, 70b auf, die zum Verbund, also Ankoppeln, an die jeweiligen Werkstückträger 5a, 5b dienen.

Hierzu sind die Verbindungsstellen 70 als U-förmige Ausnehmungen realisiert, welche eine Mitnehmereigenschaft in Längsrichtung der Führungsbahn 4 formschlüssig erlauben, aber ein Auskuppeln des am Werkstückträger 5a, 5b vorgesehenen Mitnehmerstiftes 50a, 50b bei der Querbewegung 43 gestatten. Durch die Bewegung des Führungsbahnabschnitts 40 aus der Führungsbahn 4 zum Bearbeitungsraum 30 wird somit auch gleichzeitig der Mitnehmerstift 50a beziehungsweise 50b aus der Verbindungsstelle 70a, 70b herausgeführt oder bei der Zurückbewegung wieder eingeführt und somit automatisch eine Entkopplung oder Kopplung des jeweiligen Werkstückträgers 5a, 5b mit dem Transportbalken 7 erreicht.

Die Abfolge der Zuförderung beziehungsweise des Be- und Entladeprozesses der vorgeschlagenen Zuführ- und Ladeeinheit 1 ist wie folgt.

Ein zu bearbeitendes Werkstück 2 wird auf dem Werkstückaufnahmeplatz 10 auf einen Werkstückträger 5, 5b aufgesetzt.

Der Transportbalken 7 bewegt sich aus seiner oberen Position in die untere Position derart, dass der erste Werkstückträger 5b vom Werkstückaufnahmeplatz auf den Führungsbahnabschnitt 40 gelangt.

Der Führungsbahnabschnitt 40 wird quer versetzt (Doppelpfeil 43), der auf ihm ruhende Werkstückträger 5b gelangt in Richtung des Bearbeitungsraumes 30, somit gelangt das auf dem Werkstückträger 5b ruhende Werkstück 2 in den Bearbeitungsraum 30.

Es erfolgt dann entweder eine Absetzbewegung der Konsole 41, die den Führungsbahnabschnitt 40 trägt oder eine Anhebbewegung der Werkstückauflage 35, die den Bearbeitungsplatz 31 trägt. Dadurch kommt das Werkstück 2 frei von dem Werkstückträger 5b.

Der Werkstückträger 5b ist entladen, er wird aus dem Bearbeitungsraum 30 zurückgezogen, indem der Führungsbahnabschnitt 40 zurückgezogen wird derart, dass der Führungsbahnabschnitt 40 wieder in die Führungsbahn 4 einkoppelt.

Der Transportbalken 7 wird wieder zurückbewegt derart, dass der erste Werkstückträger 5b wieder auf den Werkstückaufnahmeplatz 10 gelangt, wobei gleichzeitig der leere zweite Werkstückträger 5a von dem Werkstückabnahmeplatz 11 auf den Führungsbahnabschnitt 40 versetzt wird.

Nachdem die Bearbeitung des Werkstückes 2 in der Bearbeitungsmaschine 3 abgeschlossen ist, bewegt sich wiederum der Führungsbahnabschnitt 40 entlang des Doppelpfeils 43 in die Bearbeitungsmaschine 3, wobei der Bearbeitungsraum 30 durch die geöffnete Öffnung 32 zugänglich ist. Der Werkstückträger 5a untergreift in geeigneter Weise das fertig bearbeitete Werkstück 2 und es erfolgt eine Relativbewegung zwischen dem Werkstückträger 5a und dem Bearbeitungsplatz 31 derart, dass das Werkstück 2 von dem Bearbeitungsplatz 31 freikommt und auf dem Werkstückträger 5a ruht.

Hernach wird der Werkstückträger 5a zurückgezogen, indem der Führungsbahnabschnitt 40 zurückgezogen wird, der beladene Werkstückträger 5a gelangt zurück auf die Führungsbahn 4, der Führungsbahnabschnitt 40 koppelt wieder in die Führungsbahn 4 ein, gleichzeitig wird auch der Werkstückträger 5a in die Verbindungsstelle 70a des Transportbalkens 7 eingekoppelt, um bei der nächstfolgenden Abwärtsbewegung des Transportbalkens 7 das fertig bearbeitete Werkstück 2 zum Werkstückabnahmeplatz 11 zu bewegen.

Darauf erfolgt der Zuführ- und Ladeprozess von Neuem.

## Patentansprüche

1. Zuführ- und Ladeeinheit, die dazu vorgesehen ist, ein oder mehrere Werkstücke (2, 2a, 2b) für Bearbeitungszwecke auf den Bearbeitungsplatz (31) in dem Bearbeitungsraum (30) einer Bearbeitungsmaschine (3) zu-und/oder abzuführen, wobei die Zuführ- und Ladeeinheit (1) mindestens zwei auf einer Führungsbahn (4) bewegbare Werkstückträger (5, 5a, 5b) umfasst, und die Werkstückträger (5, 5a, 5b) für die Aufnahme und den Transport des mindestens einen Werkstückes (2, 2a, 2b) dienen, **dadurch gekennzeichnet, dass** die Führungsbahn (4) einen winklig oder quer zur Förderrichtung (20) der Werkstücke (2, 2a, 2b) auf der Führungsbahn (4), durch einen Antrieb bewegbaren, mindestens einen Werkstückträger (5, 5a, 5b) aufnehmenden Führungsbahnabschnitt (40) aufweist, und der Führungsbahnabschnitt (40) den Werkstückträger (5, 5a, 5b) für Be- oder Entladezwecke in Richtung des Bearbeitungsraumes (30) oder zurück versetzt, und eine Andrückvorrichtung (6) an dem bewegbaren Führungsbahnabschnitt (40) und mit diesem mitfahrend ausgebildet ist.

2. Zuführ- und Ladeeinheit nach Anspruch 1, **dadurch gekennzeichnet**, **dass** die Andrückvorrichtung (6) für das positionsgenaue Aufsetzen des Werkstückes (2, 2a, 2b) auf den Bearbeitungsplatz (31) vorgesehen ist.

3. Zuführ- und Ladeeinheit nach einem der vorhergehenden Ansprüche, **dadurch gekennzeichnet**, **dass** die Andrückvorrichtung (6) an dem Werkstückträger (5, 5a, 5b) und mit diesem mitfahrend ausgebildet ist.

4. Zuführ- und Ladeeinheit nach einem der vorhergehenden Ansprüche, dadurch **gekennzeichnet, dass** der Werkstückträger (5, 5a, 5b) gabelartig ausgebildet ist.

5. Zuführ- und Ladeeinheit nach einem der vorhergehenden Ansprüche, **dadurch gekennzeichnet**, **dass** der Werkstückträger (5, 5a, 5b) auf dem Führungsbahnabschnitt (40) für Entlade- oder Beladezwecke anhebbar beziehungsweise absenkbar ist.

6. Zuführ- und Ladeeinheit nach einem der vorhergehenden Ansprüche, **dadurch gekennzeichnet**, **dass** der Führungsbahnabschnitt (40) an einer für Entlade- bzw. Beladezwecke anhebbaren beziehungsweise absenkbaren Konsole (41) angeordnet ist, der Bearbeitungsplatz (31) an einer anhebbaren beziehungsweise absenkbaren Werkstückauflage (35) angeordnet ist und die Werkstückauflage (35) für Entlade-oder Beladezwecke absenkbar oder anhebbar ist.

7. Zuführ- und Ladeeinheit nach einem der vorhergehenden Ansprüche, **dadurch gekennzeichnet**, **dass** für den Antrieb des Werkstückträgers (5, 5a, 5b) auf der Führungsbahn (4) ein parallel zur Führungsbahn (4) beweglicher und antreibbarer Transportbalken (7) vorgesehen ist, der mindestens zwei Verbindungsstellen (70a, 70b) zum zumindest kraftschlüssigen Verbund mit je einem Werkstückträger (5, 5a, 5b) mit dem Transportbalken (7) aufweist.

8. Zuführ- und Ladeeinheit nach einem der vorhergehenden Ansprüche, **dadurch gekennzeichnet**, **dass** auf der Führungsbahn (4) genau zwei Werkstückträger (5a, 5b) vorgesehen sind und ein erster Werkstückträger (5b) zwischen einem Werkstückaufnahmeplatz (10) und dem Führungsbahnabschnitt (40) und ein zweiter Werkstückträger (5a) zwischen dem Führungsbahnabschnitt (40) und einem Werkstückabnahmeplatz (11) hin und her verkehrt.

9. Zuführ- und Ladeeinheit nach einem der vorhergehenden Ansprüche, **dadurch gekennzeichnet**, **dass** die Zuführ- und Ladeeinheit (1) zur Verkettung von mindestens zwei in Werkstückförderrichtung (20) hintereinander angeordneten Bearbeitungsmaschinen (3) dient.

10. Zuführ- und Ladeeinheit nach einem der vorhergehenden Ansprüche, **dadurch gekennzeichnet**, **dass** der Führungsbahnabschnitt (40) zur wechselseitigen Aufnahme und Bewegung des ersten beziehungsweise zweiten Werkstückträgers (5a, 5b) in Richtung des Bearbeitungsraumes (30) und zurück dient.

11. Zuführ- und Ladeeinheit nach einem der vorhergehenden Ansprüche, gekennzeichnet durch genau einen Antrieb für den Führungsbahnabschnitt (40).

12. Bearbeitungsmaschine mit einer Zuführ- oder Ladeeinheit nach einem der vorhergehenden Ansprüche.

## Claims

1. Supply and loading unit provided for supplying and/or removing one or more work pieces (2, 2a, 2b) for machining purposes to the processing station (31) in the machining chamber (30) of a machine tool (3), wherein the supply and loading unit (1) comprises at least two work piece carriers (5, 5a, 5b) movable on a guide path (4), and the work piece carriers (5, 5a, 5b) serve for picking-up and conveying of at the least one work piece (2, 2a, 2b), **characterized in that** the guide path (4) has a guide path sector (40) that is angled or transverse to the conveying direction (20) of the work pieces (2, 2a, 2b) on the guide path (4), and movable by a drive, and receiving at least one work piece carrier (5, 5a, 5b), and wherein the guide path sector (40) displaces the work piece carrier (5, 5a, 5b) for loading or unloading purposes in the direction of the processing chamber (30) or back, and wherein a pressing device (6) is formed such at the movable guide path sector (40) that it travels along with it.

2. Supply and loading unit according to claim 1, **characterized in that** the pressing device (6) is provided for an exact positioning of the work piece (2, 2a, 2b) on the processing station (31).

3. Supply and loading unit according to one of the preceding claims, **characterized in that** the pressing device (6) is formed such at the work piece carrier (5, 5a, 5b) that it travels along with it.

4. Supply and loading unit according to one of the preceding claims, **characterized in that** the work piece carrier (5, 5a, 5b) is designed fork-like.

5. Supply and loading unit according to one of the preceding claims, **characterized in that** the work piece carrier (5, 5a, 5b) can be lifted and/or lowered for loading or unloading purposes on the guide path sector (40).

6. Supply and loading unit according to one of the preceding claims, **characterized in that** the guide path sector (40) is arranged at a console (41) that can be lifted and/or lowered for loading and unloading purposes, the processing station (31) is arranged at a work piece support (35) that can be lifted and/or lowered, and the work piece support (35) can be lifted and/or lowered for loading or unloading purposes.

7. Supply and loading unit according to one of the preceding claims, **characterized in that** for driving the work piece carrier (5, 5a, 5b) on the guide path (4) a conveyor beam (7) is provided that moves and is driven parallel to the guide path (4), the conveyor beam (7) having at least two joints (70a, 70b) for the at least force-fitting interlocking with one work piece carrier (5, 5a, 5b) each with the conveyor beam (7).

8. Supply and loading unit according to one of the preceding claims, **characterized in that** on the guide path (4) exactly two work piece carriers (5a, 5b) are provided, and a first work piece carrier (5b) travels between a work piece pick-up station (10) and the guide path sector (40), and a second work piece carrier (5a) travels between the guide path sector (40) and a work piece removing station (11).

9. Supply and loading unit according to one of the preceding claims, **characterized in that** the supply and loading unit (1) serves for interlocking of at least two machine tools (3) arranged one behind the other in the conveying direction (20) of the work piece.

10. Supply and loading unit according to one of the preceding claims, **characterized in that** the guide path sector (40) serves for a mutual picking-up and motion of the first and/or second work piece carrier (5a, 5b) in the direction of the processing chamber (30) and back.

11. Supply and loading unit according to one of the preceding claims, **characterized by** exactly one drive for the guide path sector (40).

12. Machine tool with a supply or loading unit according to one of the preceding claims.

## Revendications

1. Unité d'amenée et de chargement destinée à amener et/ou sortir une ou plusieurs pièces à usiner (2, 2a, 2b) pour des besoins d'usinage vers la place d'usinage (31) dans l'espace d'usinage (30) d'une machine d'usinage (3), l'unité d'amenée et de chargement (1) comportant au moins deux portes-pièces mobiles (5, 5a, 5b) situés sur une voie de guidage (4) et les portes-pièces mobiles (5, 5a, 5b) servant à recevoir et à déplacer au moins une pièce à usiner (2, 2a, 2b), **caractérisée en ce que** la voie de guidage (4) possède une portion de voie de guidage (40), mobile à l'aide d'une commande, située au-dessus de la voie de guidage, recevant au moins un porte-pièce (5, 5a, 5b) pour des pièces à usiner, orientées selon un angle non nul ou perpendiculaire à la direction de transport (20) des pièces à usiner (2, 2a, 2b) de façon à ce que la portion de voie de guidage (40) déplace le porte-pièce (5, 5a, 5b) des pièces à usiner dans la même direction ou celle opposée à celle allant vers l'espace d'usinage (30) pour des besoins de chargement ou de déchargement et comporte au niveau de la portion de voie de guidage (40) un dispositif d'appui (6) se déplaçant avec celle-ci.

2. Unité d'amenée et de chargement selon la revendication 1, **caractérisée en ce que** le dispositif d'appui (6) sert à la mise en place de la pièce à usiner (2, 2a, 2b) à une position précise sur la place d'usinage (31).

3. Unité d'amenée et de chargement selon une des revendications précédentes, **caractérisée en ce que** le dispositif d'appui (6) est situé au niveau du porte-pièce (5, 5a, 5b) des pièces à usiner en se déplaçant avec celui-ci.

4. Unité d'amenée et de chargement selon une des revendications précédentes, **caractérisée en ce que** le porte-pièce (5, 5a, 5b) des pièces à usiner possède une forme de fourche.

5. Unité d'amenée et de chargement selon une des revendications précédentes, **caractérisée en ce que** le porte-pièce (5, 5a, 5b) de pièces à usiner, situé au niveau de la portion de voie de guidage (40), peut être soulevé ou abaissé pour des raisons de déchargement ou de chargement.

6. Unité d'amenée et de chargement selon une des revendications précédentes, **caractérisée en ce que** la portion de voie de guidage (40) est située au niveau d'une console (41) pouvant être soulevée ou abaissée pour des besoins de chargement ou déchargement, **en ce que** la place d'usinage (31) est située au niveau d'un support (35) de pièce à usiner pouvant être soulevé ou abaissé et **en ce que** le support (35) de pièce à usiner peut être soulevé ou abaissé pour des besoins de déchargement et de chargement.

7. Unité d'amenée et de chargement selon une des revendications précédentes, **caractérisée en ce qu'**une poutre de transport (7), mobile et pouvant être motorisée, située sur la voie de guidage (4) et orientée parallèlement à la voie de guidage est prévue comme commande des portes-pièces (5, 5a, 5b) et comporte pour ceci au moins deux interconnexions (70a, 70b) par au moins un lien de force entre la poutre de transport (7) et chacun des portes-pièces (5, 5a, 5b).

8. Unité d'amenée et de chargement selon une des revendications précédentes, **caractérisée en ce qu'**exactement deux portes-pièces (5a, 5b) sont prévus sur la voie de guidage (4) et **en ce qu'**un premier porte-pièce (5b) effectue un va-et-vient entre une zone de réception (10) de pièces à usiner et la portion de voie de guidage (40) et **en ce qu'**un deuxième porte-pièce (5a) effectue un va-et-vient entre la portion de voie de guidage (40) et une zone de livraison (11) de pièces usinées.

9. Unité d'amenée et de chargement selon une des revendications précédentes, **caractérisée en ce que** l'unité d'amenée et de chargement (1) sert à lier au moins deux machines d'usinage (3) situées l'une derrière l'autre selon la direction de transport (20) des pièces à usiner.

10. Unité d'amenée et de chargement selon une des revendications précédentes, **caractérisée en ce que** la portion de voie de guidage (40) sert en alternance à recevoir et à déplacer le premier ou le deuxième porte-pièce (5a, 5b) vers l'espace d'usinage (30) et le retour.

11. Unité d'amenée et de chargement selon une des revendications précédentes, **caractérisée par** exactement une commande pour la portion de voie de guidage (40).

12. Machine d'usinage avec une unité d'amenée ou de chargement selon une des revendications précédentes.
